# EUROPÄISCHE PATENTSCHRIFT

(11) **EP 1 068 431 B1**
(45) Veröffentlichungstag und Bekanntmachung des Hinweises auf die Patenterteilung: **19.06.2002**
(21) Anmeldenummer: 99916862.8
(22) Anmeldetag: 22.03.1999
(51) Int. Cl.: F01N 3/28, F01N 3/08

(54) **WABENKÖRPER MIT ADSORBERMATERIAL, INSBESONDERE FÜR EINE KOHLENWASSERSTOFF-FALLE**
HONEYCOMB BODY HAVING AN ADSORPTION MATERIAL, ESPECIALLY FOR A HYDROCARBON TRAP
CORPS ALVEOLAIRE COMPORTANT UN MATERIAU ADSORBANT, DESTINE NOTAMMENT A UN PIEGE A HYDROCARBURES

(30) Priorität: 30.03.1998 DE 19814132
(43) Veröffentlichungstag der Anmeldung: 17.01.2001
(73) Patentinhaber: Emitec Gesellschaft für Emissionstechnologie mbH, 53797 Lohmar (DE)
(72) Erfinder: BRÜCK, Rolf, D-51429 Bergisch Gladbach (DE); HIRTH, Peter, D-53797 Lohmar (DE)
(74) Vertreter: Kahlhöfer, Hermann, Dipl.-Phys.
(86) Internationale Anmeldenummer: EP9901923
(87) Internationale Veröffentlichungsnummer: WO9950540

(56) Entgegenhaltungen:
- EP-A- 0 582 971
- EP-A- 0 622 530

## Beschreibung

Die vorliegende Erfindung betrifft einen Wabenkorper mit Adsorbermaterial insbesondere für eine sogenannte Kohlenwasserstoff-Falle (HC-Falle), bevorzugt im Abgasreinigungssystem eines Kraftfahrzeuges.

Im Zuge der weltweit immer höher werdenden Anforderungen an die Reinigung des Abgases von Kraftfahrzeugen wird besondere Aufmerksamkeit der Reinigung des Abgases in der Kaltstartphase eines Verbrennungsmotors geschenkt. Der Grund hierfür ist, daß unmittelbar nach dem Start eines Verbrennungsmotors verhältnismäßig große Mengen an unverbrannten Kohlenwasserstoffen im Abgas vorhanden sind, wobei gleichzeitig katalytische Konverter im Abgasreinigungssystem noch nicht auf einer für die katalytische Umsetzung dieser Kohlenwasserstoffe genügend hohen Temperatur sind. Ein Lösungsweg zur Verringerung des Ausstoßes an Kohlenwasserstoffen. insbesondere während der Kaltstartphase eines Verbrennungsmotors, ist der Einsatz einer HC-Falle. Eine HC-Falle ist im allgemeinen ein Wabenkörper mit für ein Gas durchlässigen Kanälen, die durch Trennwände voneinander zumindest teilweise getrennt sind, wobei der Wabenkörper mit einem Adsorbermaterial, vorzugsweise Zeolith, beschichtet ist, welches bei niedriger Temperatur Kohlenwasserstoffe adsorbiert und diese bei höherer Temperatur wieder desorbiert. Typischerweise werden solche HC-Fallen einem katalytischen Konverter vorgeschaltet. Ein Beispiel dafür ist z. B. aus der EP 0 582 971 B1 bekannt. Auch die EP 0 424 966 A1 beschreibt ein solches System, wobei zusätzlich die HC-Falle am Ende der Kaltstartphase durch eine Bypassleitung überbrückt wird, um eine Überhitzung im Dauerbetrieb zu vermeiden. Das hier gesagte kann auch bei Adsorbern für andere Abgasanteile, z.B. Stickoxide oder Wasser, von Bedeutung sein.

Alle bisherigen Konzepte für den Aufbau und die Anordnung einer HC-Falle müssen der Tatsache Rechnung tragen, daß es bisher kaum Adsorbermaterialien gibt, die im Abgassystem eines Verbrennungsmotors langzeitbeständig sind und gleichzeitig eine Desorptionstemperatur haben, die oberhalb der für eine katalytische Umsetzung von Kohlenwasserstoffen notwendigen Mindesttemperatur liegt. Aus diesem Grunde gehen die bisher bekannten Konzepte davon aus, daß eine HC-Falle eine hohe spezifische Wärmekapazität haben sollte, insbesondere eine höhere Wärmekapazität als ein nachgeschalteter katalytischer Reaktor, damit sich erst der katalytische Reaktor auf die für die katalytische Reaktion notwendige Mindesttemperatur aufheizen kann, bevor die Desorption in der HC-Falle beginnt. Dieses Konzept beschreibt vor allem auch die EP 0 582 971 B1.

Trotzdem bleibt das Problem bestehen, daß die HC-Falle in der Kaltstartphase dem Abgas Wärme entzieht und dadurch das Erreichen der für die katalytische Reaktion notwendigen Mindesttemperatur eines nachgeschalteten katalytischen Konverters in jedem Falle verzögert, so daß es immer schwierig ist, einen Kompromiß für die Dimensionierung von HC-Falle und nach geschaltetem katalytischen Konverter zu finden.

Aufgabe der vorliegenden Erfindung ist es, einen Wabenkörper mit Adsorbermaterial, insbesondere für Kohlenwasserstoffe, zu schaffen, der eine verbesserte Reinigung des Abgases eines Verbrennungsmotors, insbesondere in der Kaltstartphase, ermöglicht.

Zur Lösung dieser Aufgabe dient gemäß dem Anspruch 1 ein Wabenkörper mit für ein Gas durchlässigen Kanälen, deren innere Querschnittsform und Anzahl eine spezifische geometrische Oberfläche (GSA), gemessen in m²/l des Wabenkörpers festlegt und die durch Trennwände voneinander zumindest teilweise getrennt sind, wobei Material und Dicke der Trennwände eine auf die geometrische Oberfläche bezogene spezifische Wärmekapazität (cp), gemessen in kJ/(K·m²) des Wabenkörpers festlegen, wobei weiter der Wabenkörper ein Adsorbermaterial, insbesondere für Kohlenwasserstoffe, aufweist, und wobei ferner die spezifische geometrische Oberfläche (GSA) des Wabenkörpers geteilt durch die oberflächenbezogene spezifische Wärmekapazität (cp), gemessen bei Raumtemperatur und ohne Adsorbermaterial und ohne eventuelle sonstige Beschichtungen, größer oder gleich 37,5 m·K/J (Meter·Kelvin/Joule) ist, vorzugsweise größer 40, insbesondere größer oder gleich 60.

Die Wärmekapazität eines Materials ist von der Temperatur des Materials abhängig und wird bei Abgasreinigungssystemen häufig für relativ hohe Temperaturbereiche betrachtet und angegeben. Für die Funktion eines Adsorbers, insbesondere einer HC-Falle, ist jedoch der Temperaturbereich unterhalb von 350 °C entscheidend, weshalb die Angaben im vorliegenden Falle auf Raumtemperatur, also 20 °C, bezogen sind. Die spezifische Wärmekapazität in dem hier definierten Sinne ist dabei die auf eine geometrische Oberflächeneinheit des Wabenkörpers bezogene Wärmekapazität, also eine von Wanddicke und Porosität der Trennwände und Material abhängige Größe.

Bisherige Überlegungen gingen davon aus, daß eine HC-Falle die Desorptionstemperatur, bei der die Desorption von Kohlenwasserstoffen beginnt, nicht erreichen sollte, bevor nicht ein nachgeschalteter katalytischer Konverter eine für die katalytische Umsetzung notwendige Mindesttemperatur erreicht hat. Diese Überlegung berücksichtigt, jedoch nicht, daß die katalytische Umsetzung bei Erreichen der notwendigen Mindesttemperatur sehr schnell die vollständige Umsetzung aller Kohlenwasserstoffe bewirkt, da sich ein katalytischer Konverter, wenn er auch nur an einer Stelle die notwendige Mindesttemperatur erreicht, wegen der dann ablaufenden exothermen Reaktion fast schlagartig vollständig weiter aufheizt und dabei alle anströmenden Kohlenwasserstoffe katalytisch umsetzt. Im Gegensatz dazu läuft die Desorption in einer HC-Falle sehr langsam ab, so daß auch bei Erreichen der Desorptionstemperatur und nach deren Überschreiten nur allmählich der gespeicherte Kohlenwasserstoff freigesetzt wird. Diese nach Rechnungen und Versuchen gefundene Erkenntnis führt im Gegensatz zur bisherigen technischen Lehre dazu, daß eine HC-Falle mit möglichst geringer Wärmekapazität und möglichst großer geometrischer Oberfläche bevorzugt wird, wobei ein Verhältnis zwischen spezifischer geometrischer Oberfläche und oberflächenbezogener spezifischer Wärmekapazität, gemessen bei Raumtemperatur und ohne Adsorbermaterial und ohne eventuelle sonstige Beschichtungen, von größer oder gleich 40 m·K/J als günstig gefunden wurde. Bevorzugt wird sogar ein noch größeres Verhältnis von größer gleich 60. Bei einer solchen Anordnung heizt sich zwar die HC-Falle relativ schnell im Abgasstrom während der Kaltstartphase auf und beginnt allmählich mit der Desorption von Kohlenwasserstoffen, jedoch kann sich, weil die HC-Falle dem Abgasstrom mit zunehmender Aufheizung immer weniger Wärme entzieht, auch ein nachfolgender katalytischer Konverter schneller aufheizen und damit schneller seine für die katalytische Reaktion notwendige Mindesttemperatur erreichen. Insgesamt ergibt sich dabei, daß Kohlenwasserstoffe in der Kaltstartphase schon sehr früh umgesetzt werden und der Schadstoffausstoß gesenkt werden kann. Auch für die Dimensionierung einer HC-Falle hat die erfindungsgemäße Lösung Vorteile, da ein schnelles Anspringen der katalytischen Reaktion ein kleineres Speichervolumen für die HC-Falle zuläßt.

Ein besonders vorteilhafter Aspekt der Erfindung ergibt sich, wenn der Wabenkörper selbst zusätzlich eine katalytisch aktive Beschichtung aufweist, die zumindest oxidierend wirkt. An dieser Beschichtung können dann, sobald die dafür notwendige Mindesttemperatur erreicht ist, die desorbierten Kohlenwasserstoffe sofort katalytisch umgesetzt werden. Dabei zeigen Versuche, daß sofort bei Beginn der Umsetzung die Temperatur des Wabenkörpers durch die exotherme Reaktion ansteigt, wodurch der Desorptionsprozeß und die Umsetzung beschleunigt werden. Dies ist insbesondere von Vorteil, wenn ein Kraftfahrzeug häufig im Kurzstreckenbetrieb eingesetzt wird, da die HC-Falle sehr schnell wieder vollständig regeneriert und für die Aufnahme von Kohlenwasserstoffen beim nächsten Kaltstart bereit ist.

Bei der Dimensionierung eines erfindungsgemäßen Wabenkörpers spielen zahlreiche Faktoren eine Rolle, u. a. das Gesamtvolumen des Wabenkörpers, das Verhältnis von axialer Länge und Querschnittsfläche und die Plazierung im Abgassystem. Davon unabhängig hat sich aber gezeigt, daß eine Erhöhung der spezifischen geometrischen Oberfläche des Wabenkörpers generell günstig ist, was hauptsächlich durch eine Erhöhung der Anzahl der Kanäle pro Querschnittsflächeneinheit erreichbar ist. Besonders günstig sind daher Wabenkörper mit mehr als 360 Kanälen pro Quadratinch (cpsi), bevorzugt sogar mehr als 450 cpsi und insbesondere mehr als 540 cpsi.

Ebenfalls günstig für einen erfindungsgemäßen Wabenkörper ist es, die Trennwände so auszubilden, daß sie eine möglichst geringe Wärmekapazität haben, was im wesentlichen durch Verringerung der Dicke der Trennwände erreichbar ist. Für Wabenkörper aus Metallblechlagen wird daher eine Dicke kleiner oder gleich 40 µm, vorzugsweise kleiner oder gleich 30 µm eingesetzt. Für keramische Wabenkörper ist analog der Einsatz von sogenannter Dünnwandkeramik besonders günstig.

Ein erfindungsgemäßer Wabenkörper wird bevorzugt in einem Abgasreinigungssystem eines Kraftfahrzeuges eingesetzt, und zwar in Verbindung mit einem nachgeschalteten Drei-Wege-Katalysator. Ausgestaltungen von bekannten Abgasreinigungssystemen können auch bei Anwendung des erfindungsgemäßen Wabenkörpers von Vorteil sein, insbesondere eine in Abhängigkeit vom Betriebszustand steuerbare Bypassleitung und/oder eine elektrische Beheizung des Wabenkörpers oder eines nachgeschalteten Dreiwegekatalysators.

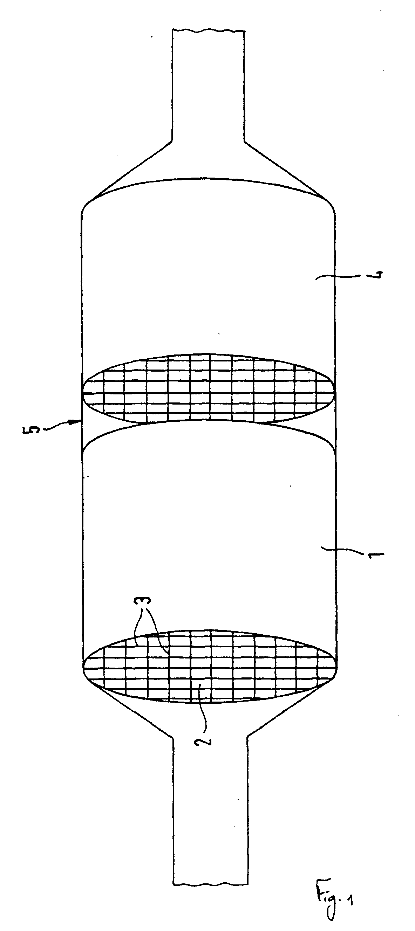

Ein Ausführungsbeispiel der Erfindung ist schematisch in der Zeichnung dargestellt. Der erfindungsgemäße, als HC-Falle dienende. Wabenkörper 1 weist Kanäle 2 auf, welche durch Trennwände 3 voneinander getrennt sind. Ein solcher Wabenkörper 1 kann insbesondere in einem Abgassystem 5 eines Kraftfahrzeuges angeordnet sein, wobei er einem Drei-Wege-Katalysator 4 vorgeschaltet ist. In der Kaltstartphase strömt das langsam heißer werdende Abgas zunächst durch den Wabenkörper 1, wobei praktisch alle in dem Abgas enthaltenen Kohlenwasserstoffe von einer Beschichtung zur Adsorption von Kohlenwasserstoffen, insbesondere einer Zeolithbeschichtung, auf den Trennwänden 3 adsorbiert werden. Das Abgas durchströmt anschließend den Drei-Wege-Katalysator 4. Aufgrund des erfindungsgemäßen, günstigen Verhältnisses von geometrischer Oberfläche und Wärmekapazität des Wabenkörpers 1 pro Oberflächeneinheit ist die Zeitspanne, in der der Wabenkörper 1 bereits Kohlenwasserstoffe desorbiert, der Drei-Wege-Katalysator 4 diese jedoch noch nicht umsetzen kann, sehr kurz. Danach erfolgt fast schlagartig eine vollständige Umsetzung aller im Abgas enthaltenen und desorbierten Kohlenwasserstoffe, so daß insgesamt der Ausstoß an Kohlenwasserstoffen kleiner als bei herkömmlichen Systemen ist. Dieser Vorgang kann noch unterstützt werden, wenn der Wabenkörper 1 zusätzlich eine katalytisch aktive, zumindest die Oxidation beschleunigende, katalytisch aktive Beschichtung aufweist.

Ein erfindungsgemäßer Wabenkörper eignet sich besonders für den Einsatz in Abgasreinigungssystemen von Kraftfahrzeugen, die höchste Anforderungen an die Umweltverträglichkeit erfüllen sollen.

### Bezugszeichenliste

- 1: Wabenkörper
- 2: Kanäle
- 3: Trennwände
- 4: Drei-Wege-Katalysator
- 5: Abgasreinigungssystem
- GSA: spezifische geometrische Oberfläche (Quadratmeter pro Liter)
- cp: spezifische Wärmekapazität pro geometrischer Oberfläche (Kilojoule pro Quadratmeter)

## Patentansprüche

1. Wabenkörper (1) mit für ein Gas durchlässigen Kanälen (2), deren innere Querschnittsform und Anzahl eine spezifische geometrische Oberfläche (GSA) des Wabenkörpers festlegt und die durch Trennwände (3) voneinander zumindest teilweise getrennt sind, deren Material und Dicke eine auf die Oberflächeneinheit bezogene spezifische Wärmekapazität festlegen, wobei der Wabenkörper ein Adsorbermaterial, insbesondere für Kohlenwasserstoffe, aufweist, **dadurch gekennzeichnet, daß** die spezifische geometrische Oberfläche (GSA), gemessen in Quadratmeter pro Liter [m²/l] des Wabenkörpers (1) geteilt durch die oberflächenbezogene spezifische Wärmekapazität (cp), gemessen in Kilojoule pro Kelvin pro Quadratmeter [kJ/(K·m²)] bei Raumtemperatur und ohne Adsorbermaterial und ohne eventuelle sonstige Beschichtungen, größer oder gleich 37,5 Meter Kelvin pro Joule [m·K/J] ist, vorzugsweise größer oder gleich 40, insbesondere größer oder gleich 60.

2. Wabenkörper nach Anspruch 1, **dadurch gekennzeichnet, daß** der Wabenkörper (1) zusätzlich eine katalytisch aktive Beschichtung aufweist, die zumindest oxidierend wirkt.

3. Wabenkörper nach Anspruch 1 oder zwei, **dadurch gekennzeichnet, daß** die Anzahl der Kanäle (2) pro Quadratinch (cpsi) mindestens 360, vorzugsweise mehr als 450, insbesondere mehr als 540, beträgt.

4. Wabenkörper nach einem der vorhergehenden Ansprüche, **dadurch gekennzeichnet, daß** der Wabenkörper (1) aus Metallblechlagen geschichtet oder gewickelt ist und die Dicke der Trennwände (3) kleiner oder gleich 40 µm, vorzugsweise kleiner oder gleich 30 µm, ist.

5. Abgasreinigungssystem eines Kraftfahrzeugs mit mindestens einem Dreiwegekatalysator und einem Wabenkörper als Kohlenwasserstoff-Falle, der dem Dreiwegekatalysator vorgeschaltet ist, **dadurch gekennzeichnet, dass** der Wäbenkörper gemäß einem der Ansprüche 1 bis 4 ausgebildet ist.

## Claims

1. Honeycomb body (1) with channels (2) through which a gas can pass and the inner cross-sectional shape and number of which define a specific geometrical surface area (GSA) of the honeycomb body, and which are separated at least partly from one another by separating walls (3), the material and thickness of which define a specific thermal capacity in relation to the unit of surface area, the honeycomb body having an adsorber material, in particular for hydrocarbons, **characterized in that** the specific geometrical surface area (GSA), measured in square meters per liter [m²/l], of the honeycomb body (1) divided by the surface-area-related specific thermal capacity (cp), measured in kilojoules per Kelvin per square meter [kJ/(K·m²)], at room temperature and without adsorber material and without any other coatings, is greater than or equal to 37,5 meters Kelvin per Joule [m·K/J], preferably greater than or equal to 40, in particular greater than or equal to 60.

2. Honeycomb body according to claim 1, **characterized in that** the honeycomb body (1) additionally has a catalytically active coating, which has at least an oxidizing effect.

3. Honeycomb body according to claim 1 or 2, **characterized in that** the number of channels (2) per square inch (cpsi) is at least 360, preferably over 450, in particular more than 540.

4. Honeycomb body according to one of the preceding claims, **characterized in that** the honeycomb body (1) is stacked or wound from layers of sheet metal and the thickness of the separating walls (3) is less than or equal to 40 µm, preferably less than or equal to 30 µm.

5. Exhaust gas purification system of a motor vehicle with at least one three-way catalytic converter and one honeycomb body as hydrocarbon trap being arranged upstream of the three-way catalytic converter, **characterized in that** the honeycomb body is of a configuration according to one of claims 1 to 4.

## Revendications

1. Corps alvéolaire (1) avec des canaux (2) pouvant être traversés par un gaz, dont la forme de section transversale et le nombre définissent une surface spécifique géométrique (GSA) du corps alvéolaire, et qui sont au moins partiellement séparés les uns des autres par des parois de séparation (3), dont le matériau et l'épaisseur définissent une capacité thermique spécifique par rapport à l'unité de surface, le corps alvéolaire présentant un matériau adsorbant, notamment pour des hydrocarbures, **caractérisé en ce que** la surface spécifique géométrique (GSA), mesurée en mètre carré par litre [m²/l] du corps alvéolaire (1) divisé par la capacité thermique spécifique relativement à la surface (cp), mesurée en kilojoule par Kelvin par mètre carré [kJ/(K·m²)] à température ambiante et sans matériau adsorbant et sans autres revêtements éventuels, est plus grande que ou égale à 37,5 mètres Kelvin par joule [m·K/J], de préférence plus grande que ou égale à 40, notamment plus grande que ou égale à 60.

2. Corps alvéolaire selon la revendication 1, **caractérisé en ce que** le corps alvéolaire (1) présente en outre un revêtement à activité catalytique, qui a au moins un effet oxydant.

3. Corps alvéolaire selon la revendication 1 ou 2, **caractérisé en ce que** le nombre de canaux (2) par pouce carré (cpsi) comporte au moins 360, de préférence plus de 450, notamment plus de 540.

4. Corps alvéolaire selon l'une des revendications précédentes, **caractérisé en ce que** le corps alvéolaire (1) est empilé ou enroulé à partir de couches de tôles métalliques et que l'épaisseur des parois de séparation (3) est inférieure ou égale à 40 µm, de préférence inférieure ou égale à 30 µm.

5. Système d'épuration de gaz d'échappement d'un véhicule automobile avec au moins un catalyseur à triple action et un corps alvéolaire comme piège à hydrocarbures, qui précède le catalyseur à triple action, **caractérisé en ce que** le corps alvéolaire est réalisé selon l'une des revendications 1 à 4.
